# EUROPÄISCHE PATENTSCHRIFT

(11) **EP 2 399 058 B1**
(45) Veröffentlichungstag und Bekanntmachung des Hinweises auf die Patenterteilung: **08.05.2013**
(21) Anmeldenummer: 10700574.6
(22) Anmeldetag: 20.01.2010
(51) Int. Cl.: F16L 58/10, F16L 57/06, C09D 177/00

(54) **VERWENDUNG EINES LEITUNGSROHRS ZUR HERSTELLUNG EINER IM WASSER VERLEGTEN ROHRLEITUNG**
USE OF A CONDUIT PIPE FOR PRODUCING A DUCT LAID IN WATER
UTILISATION D'UN TUBE POUR LA FABRICATION D'UNE CONDUITE TUBULAIRE POSÉE SOUS L'EAU

(30) Priorität: 19.02.2009 DE 102009001001
(43) Veröffentlichungstag der Anmeldung: 28.12.2011
(73) Patentinhaber: Evonik Degussa GmbH, 45128 Essen (DE); Salzgitter Mannesmann Line Pipe Gmbh, 57074 Siegen (DE)
(72) Erfinder: DOWE, Andreas, 46325 Borken (DE); GÖRING, Rainer, 46325 Borken (DE); KOCKS, Hans-Jürgen, 57258 Freudenberg (DE); WINKELS, Jörn, 59457 Werl (DE)
(86) Internationale Anmeldenummer: PCT/EP2010/050622
(87) Internationale Veröffentlichungsnummer: WO 2010/094528

(56) Entgegenhaltungen:
- EP-A1- 1 717 022
- DE-A1-102004 063 220
- DE-A1-102005 007 034

## Beschreibung

Die vorliegende Erfindung betrifft die Verwendung eines metallischen Leitungsrohrs, das mit einer extrudierten Schicht aus einer Polyamidformmasse umhüllt ist, zur Herstellung einer im Wasser verlegten Rohrleitung.

Produktions-, Transport-, Steig- oder Produktleitungen aus Metall werden derzeit beispielsweise mit einem Polyolefin wie z. B. Polyethylen oder Polypropylen umhüllt (WO 2002/094922; US 2002/0066491; EP-A-0346101). Die Beschichtungen bzw. Umhüllungen dienen primär dem Korrosionsschutz; sie werden durch entsprechende Normen beschrieben. Für die Polyolefinumhüllungen sind dies beispielsweise die DIN EN 10288 bzw. die DIN 30678. Im Falle der Polyolefinumhüllung wird diese Schicht beispielsweise mittels Schlauch- oder Wickelextrusion hergestellt. Zur Haftvermittlung können vor der Extrusion Epoxy- und Kleberschichten nacheinander aufgebracht werden.

Ein anderer Stand der Technik, der durch die DIN EN 10310 (Deutsche Fassung EN 10310:2003) geregelt ist, sieht die Beschichtung von Stahlrohren für erd- und wasserverlegte Rohrleitungen mittels Polyamidpulver vor. Die Polyamidbeschichtung wird durch Eintauchen in ein Fluidadbett, Aufsprühen oder im Walzauftragsverfahren aufgebracht. Verfahrensbedingt lassen sich mittels Pulverbeschichtung nur relativ dünne Schichten auf das Metall aufbringen. Nachteilig ist insbesondere, dass für die Beschichtung ein Pulver aus einem relativ niedermolekularen Polyamid eingesetzt werden muss, um einen guten Verlauf der Schmelze auf der heißen Metalloberfläche zu gewährleisten. Eine so erhaltene Beschichtung weist aber eine nicht ausreichende mechanische Festigkeit auf; sie dient in erster Linie dem Korrosionsschutz. Nachteilig ist insbesondere auch, dass es auf diese Weise nicht möglich ist, eine Polyamidschicht auf ein Rohr aufzubringen, das bereits eine Beschichtung aus einem Polyolefin oder einer Haftvermittlerschicht enthält. Darüber hinaus sind auch duromere Beschichtungen auf Epoxid- oder Polyurethanbasis bekannt.

Im Rohrleitungsbau werden in zunehmendem Maße höhere technische Anforderungen an die Rohrbeschichtung gestellt, da die Umwelt-, Verlege-und Betriebsbedingungen immer anspruchsvoller werden. Eine der effektivsten Methoden zum Schutze erdverlegter Rohrleitungen vor Korrosion, insbesondere bei kathodischem Korrosionsschutz, ist eine mehrlagige Ummantelung. Diese besteht aus einer Epoxidharzschicht als erste Schicht, einem Copolymer als Kleber als zweite Schicht und einer äußeren Polyolefinschicht aus Polyethylen oder Polypropylen. Diese Ummantelungsmethode ist für kleine Rohre bis hin zu Großrohren anwendbar. Allerdings werden im Offshore- und Onshore-Bereich oftmals zusätzlich hohe Anforderungen an den Widerstand gegenüber mechanischen Beanspruchungen gestellt.

Bei einer Verlegung im Offshore-Bereich erfordern große Verlegetiefen heute den Einsatz spezieller Techniken wie beispielsweise die J-Lay-Methode. Es handelt sich hierbei um ein Verfahren mit fast vertikaler Montage des Verlegestranges auf einer halbgetauchten Verlegeplattform oder entsprechend ausgerüsteten Verlegepontons oder -schiffen. Durch entsprechende Haltevorrichtungen wird das Ende des Rohrstranges zur Montage der folgenden Rohrlänge jeweils fixiert. Dabei wirken nicht unbeträchtliche Kräfte auf die Korrosionsschutzbeschichtung. Konkret handelt es sich hier um Druckkräfte, die von der Haltevorrichtung im Wesentlichen senkrecht zur Gewichtskraft des eingespannten Rohrs ausgeübt werden. Damit wirkt auf die Korrosionsschutzbeschichtung eine scherende Druckbelastung ein.

Eine weitere Methode einer Seeverlegung von Pipelines ist das S-Lay-Verfahren. Dieses wird insbesondere bei geringeren Verlegetiefen angewendet. Die Rohrleitung wird üblicherweise auf einem Verlegeschiff horizontal verschweißt, geprüft und über einen sogenannten Stinger ins Wasser geführt. Der Stinger hat hierbei die Aufgabe, die Leitung zu stützen und in einem akzeptablen Biegeradius abzulassen. Auf dem Weg über das Verlegeschiff, den Stinger und den Meeresboden hat das Rohr hierbei die Form eines langgezogenen "S". Die mechanische Belastung für den korrosionsgeschützten Rohrstrang ist im Vergleich zum Reeling oder der J-Lay-Methode etwas geringer.

Beim sogenannten Reeling, wie es z. B. aus der US 4 117 692 oder der EP-A-1 104 525 beschrieben ist, wird der vormontierte Rohrstrang auf entsprechend dimensionierte Trommeln gewickelt. Dabei wird der Rohrstrang plastisch verformt. Zur Verlegung auf offener See wird der Rohrstrang über entsprechende Rollen wieder gerichtet und anschließend verlegt. Durch die Biegebelastung wird die Korrosionsschutzbeschichtung jedoch beträchtlichen Beanspruchungen ausgesetzt, da beim Auf- und Abwickeln sehr hohe Kräfte auf die Rohroberfläche und damit auf die Beschichtung übertragen werden. Die übertragenen Kräfte steigen mit abnehmendem Wickeldurchmesser an. Um Transportkapazitäten zu optimieren, wird jedoch ein möglichst geringer Wickeldurchmesser angestrebt.

Die J-Lay-Methode, die S-Lay-Methode und das Reeling werden beispielsweise im OCS Report MMS 2001-067, "Brief Overview of Gulf of Mexico OCS Oil and Gas Pipelines: Installation, Potential Impacts, and Mitigation Measures", herausgegeben vom U. S. Department of the Interior, Minerals Management Service, New Orleans, August 2001, näher beschrieben.

Die üblichen Ummantelungen, die im Wesentlichen dem Korrosionsschutz dienen, stellen keinen ausreichenden Schutz vor mechanischen Belastungen dar. Durch Druck- oder Reibungsbeanspruchung während des Auf- und Abwickelvorganges oder durch scherende Belastung während der Handhabung durch Greifer kann die Polymerschicht stellenweise so geschädigt werden, dass das Metall in Kontakt mit Wasser tritt. Durch die dann einsetzende Korrosion wird die Standzeit der Rohrleitung erheblich verringert. Man ist daher gezwungen, die Dicke der Ummantelung erheblich zu erhöhen, was die Kosten für die Rohrleitung erhöht; zudem wird hierdurch eine weitere Reduktion des Wickeldurchmessers limitiert. Darüber hinaus reagieren bekannte Umhüllungssysteme auf Polyethylen- oder Polypropylenbasis insbesondere bei niedrigeren Temperaturen ausgesprochen spröde, so dass sie bereits deswegen für derartige, bei der Verlegung der Rohrleitung auftretenden mechanischen Beanspruchungen nur bedingt geeignet sind. DE 10 2005 007 034 A1 offenbart eine weitere bekannte Ummantelung.

Die Aufgabe der Erfindung ist es daher, ein umhülltes metallisches Leitungsrohr zur Verfügung zu stellen, welches den hohen mechanischen Beanspruchungen bei der Verlegung im Wasser widersteht. Insbesondere soll dieses Leitungsrohr eine Reduzierung der Wickeldurchmesser erlauben und bei hoher mechanischer Beanspruchung durch den Wickelvorgang die Integrität der Beschichtung beibehalten, so dass das Metallrohr wirkungsvoll gegen Korrosion geschützt ist. Darüber hinaus soll eine feste Haftung zum Rohr bzw. zu darauf eventuell vorhandenen Beschichtungen erzielt werden. Insgesamt soll ein Rohr bereitgestellt werden, das leicht handhabbar und kostengünstig herstellbar ist.

Diese und weitere aus den Anmeldungsunterlagen ersichtliche Aufgaben werden durch die Verwendung eines beschichteten metallischen Leitungsrohres zur Herstellung einer im Wasser verlegten Rohrleitung gelöst, wobei bedingt durch das gewählte Verlegeverfahren die Beschichtung im Zuge der Verlegung einer scherenden Druckbelastung und/oder einer Biegebelastung ausgesetzt ist mit der Maßgabe, dass das Leitungsrohr mit einer extrudierten Schicht aus einer Polyamidformmasse umhüllt ist, wobei entweder die Rohrleitung zum Transport aufgewickelt ist und vor oder während der Verlegung abgewickelt wird oder die Rohrleitung nach der J-Lay-oder der S-Lay-Methode verlegt wird, und wobei weiterhin die Viskosität der extrudierten Polyamidformmasse bei 240 °C und einer Schergeschwindigkeit von 0,1 1/s gemäß ASTM D4440-3 mindestens 2000 Pa·s beträgt und die Schicht aus der Polyamidformmasse mindestens 1,0 mm dick ist.

Der Begriff "im Wasser" meint die Verlegung auf dem Boden eines Gewässers, z. B. auf dem Meeresgrund, bzw. die Verlegung in beliebiger Höhe zwischen dem Boden des Gewässers und der Gewässeroberfläche.

Mit "Beschichtung" wird hier und im Folgenden die Summe aller auf die Metalloberfläche aufgetragenen Schichten bezeichnet, also sowohl die Umhüllung mit der Schicht aus einer Polyamidformmasse als auch eventuell vorhandene Zwischenschichten, die als Haftvermittler und dergleichen fungieren.

Das metallische Leitungsrohr besteht beispielsweise aus Stahl, Edelstahl, Kupfer, Aluminium, Gusseisen, verzinktem Stahl, mit Metalllegierungen wie z. B. GALFAN beschichtetem Stahl oder aus jedem anderen Metall. Das Rohr kann nach allen Methoden des Standes der Technik hergestellt werden, z. B. als geschweißtes oder nahtloses Rohr. Entsprechende Herstellungsverfahren sind allgemein bekannter Stand der Technik.

Es hat sich erfindungsgemäß herausgestellt, dass der große Vorteil einer Polyamidbeschichtung von Leitungsrohren für den beschriebenen Verwendungsbereich insbesondere darin besteht, dass Polyamid gerade bei niedrigeren Umgebungstemperaturen seine guten mechanischen Eigenschaften beibehält. Darüber hinaus ist die hervorragende Kerbschlagzähigkeit, das herausragende Abrieb- und Reibungsverhalten sowie das gute Haftungsvermögen von Polyamid vorteilhaft für derartige Anwendungen.

Das Polyamid ist herstellbar aus einer Kombination von Diamin und Dicarbonsäure, aus einer ω-Aminocarbonsäure oder dem entsprechenden Lactam. Grundsätzlich kann jedes Polyamid verwendet werden, beispielsweise PA46, PA6, PA66 oder Copolyamide auf dieser Basis mit Einheiten, die sich von Terephthalsäure und/oder Isophthalsäure herleiten (im Allgemeinen als PPA bezeichnet). In einer bevorzugten Ausführungsform enthalten die Monomereinheiten im Mittel mindestens 8, mindestens 9 bzw. mindestens 10 C-Atome. Bei Gemischen von Lactamen wird hier das arithmetische Mittel betrachtet. Bei einer Kombination von Diamin und Dicarbonsäure muss das arithmetische Mittel der C-Atome von Diamin und Dicarbonsäure in dieser bevorzugten Ausführungsform mindestens 8, mindestens 9 bzw. mindestens 10 betragen. Geeignete Polyamide sind beispielsweise: PA610 (herstellbar aus Hexamethylendiamin [6 C-Atome] und Sebacinsäure [10 C-Atome], das Mittel der C-Atome in den Monomereinheiten beträgt hier somit 8), PA88 (herstellbar aus Octamethylendiamin und 1.8-Octandisäure), PA8 (herstellbar aus Capryllactam), PA612, PA810, PA108, PA9, PA613, PA614, PA812, PA128, PA1010, PA10, PA814, PA148, PA1012, PA11, PA1014, PA1212 und PA12. Die Herstellung der Polyamide ist Stand der Technik. Selbstverständlich können auch hierauf basierende Copolyamide eingesetzt werden, wobei gegebenenfalls auch Monomere wie Caprolactam mit verwendet werden können.

Das Polyamid kann auch ein Polyetheresteramid oder ein Polyetheramid sein. Polyetheramide sind prinzipiell z. B. aus der DE-OS 30 06 961 bekannt. Sie enthalten als Comonomer ein Polyetherdiamin. Geeignete Polyetherdiamine sind durch Konversion der entsprechenden Polyetherdiole durch reduktive Aminierung oder Kupplung an Acrylnitril mit nachfolgender Hydrierung zugänglich (z. B. EP-A-0 434 244; EP-A-0 296 852). Sie besitzen in der Regel eine zahlenmittlere Molmasse von 230 bis 4000; ihr Anteil am Polyetheramid beträgt bevorzugt 5 bis 50 Gew.-%.

Kommerziell verfügbare Polyetherdiamine ausgehend von Propylenglykol sind als JEFFAMIN^{®} D-Typen bei der Fa. Huntsman kommerziell erhältlich. Grundsätzlich sind auch Polyetherdiamine ausgehend vom 1.4-Butandiol oder 1.3-Butandiol, oder gemischt aufgebaute Polyetherdiamine, etwa mit statistischer oder mit blockweiser Verteilung der von den Diolen herrührenden Einheiten, gut geeignet.

Ebenso können auch Mischungen verschiedener Polyamide, ausreichende Verträglichkeit vorausgesetzt, verwendet werden. Verträgliche Polyamidkombinationen sind dem Fachmann bekannt; beispielsweise seien hier die Kombination PA12/PA1012, PA12/PA1212, PA612/PA12, PA613/PA12, PA1014/PA12 und PA610/PA12 sowie entsprechende Kombinationen mit PA11 aufgeführt. Im Zweifelsfall können verträgliche Kombinationen durch Routineversuche ermittelt werden.

In einer bevorzugten Ausführungsform wird eine Mischung aus 30 bis 99 Gew.-%, besonders bevorzugt 40 bis 98 Gew.-% und insbesondere bevorzugt 50 bis 96 Gew.-% Polyamid im engeren Sinne sowie 1 bis 70 Gew.-%, besonders bevorzugt 2 bis 60 Gew.-% und insbesondere bevorzugt 4 bis 50 Gew.-% Polyetheresteramid und/oder Polyetheramid verwendet. Polyetheramide sind hierbei bevorzugt.

Neben Polyamid kann die Formmasse weitere Komponenten enthalten wie z.B. Schlagzähmodifikatoren, andere Thermoplaste, Weichmacher und andere übliche Zusatzstoffe. Erforderlich ist nur, dass das Polyamid die Matrix der Formmasse bildet.

Geeignete Schlagzähmodifikatoren sind beispielsweise Ethylen/α-Olefin-Copolymere, vorzugsweise ausgewählt aus
a) Ethylen/C₃- bis C₁₂-α-Olefin-Copolymeren mit 20 bis 96, bevorzugt 25 bis 85 Gew.-% Ethylen. Als C₃- bis C₁₂-α-Olefin wird beispielsweise Propen, 1-Buten, 1-Penten, 1-Hexen, 1-Octen, 1-Decen oder 1-Dodecen eingesetzt. Typische Beispiele hierfür sind Ethylen-Propylen-Kautschuk sowie LLDPE und VLDPE.
b) Ethylen/C₃- bis C₁₂-α-Olefin/unkonjugiertes Dien-Terpolymeren mit 20 bis 96, bevorzugt 25 bis 85 Gew.-% Ethylen und bis maximal etwa 10 Gew.-% eines unkonjugierten Diens wie Bicyclo(2.2.1)heptadien, Hexadien-1.4, Dicyclopentadien oder 5-Ethylidennorbornen. Als C₃- bis C₁₂-α-Olefin sind ebenfalls beispielsweise Propen, 1-Buten, 1-Penten, 1-Hexen, 1-Octen, 1-Decen oder 1-Dodecen geeignet.

Die Herstellung dieser Copolymere bzw. Terpolymere, beispielsweise mit Hilfe eines Ziegler-Natta-Katalysators, ist Stand der Technik.

Andere geeignete Schlagzähmodifikatoren sind Styrol-Ethylen/Butylen-Blockcopolymere. Hierbei werden vorzugsweise Styrol-Ethylen/Butylen-Styrol-Blockcopolymere (SEBS) eingesetzt, die durch Hydrierung von StyrolButadien-Styrol-Blockcopolymeren erhältlich sind. Es können aber auch Diblocksysteme (SEB) oder Multiblocksysteme verwendet werden. Derartige Blockcopolymere sind Stand der Technik.

Diese Schlagzähmodifikatoren enthalten vorzugsweise Säureanhydridgruppen, die auf bekannte Weise durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht. Geeignete Reagenzien sind beispielsweise Maleinsäure, Maleinsäureanhydrid, Maleinsäuremonobutylester, Fumarsäure, Citraconsäureanhydrid, Aconitsäure oder Itaconsäureanhydrid. Auf diese Weise sind vorzugsweise 0,1 bis 4 Gew.-% eines ungesättigten Anhydrids an den Schlagzähmodifikator aufgepfropft. Gemäß dem Stand der Technik kann das ungesättigte Dicarbonsäureanhydrid oder dessen Vorstufe auch zusammen mit einem weiteren ungesättigten Monomeren wie beispielsweise Styrol, α-Methylstyrol oder Inden aufgepfropft werden.

Andere geeignete Schlagzähmodifikatoren sind Copolymere, die Einheiten der folgenden Monomere enthalten:
a) 20 bis 94,5 Gew.-% eines oder mehrerer α-Olefine mit 2 bis 12 C-Atomen,
b) 5 bis 79,5 Gew.-% einer oder mehrerer acrylischer Verbindungen, ausgewählt aus
   - Acrylsäure bzw. Methacrylsäure bzw. deren Salzen,
   - Estern von Acrylsäure bzw. Methacrylsäure mit einem C1- bis C12-Alkohol, die gegebenenfalls eine freie Hydroxyl- oder Epoxidfunktion tragen können,
   - Acrylnitril bzw. Methacrylnitril,
   - Acrylamiden bzw. Methacrylamiden,
c) 0,5 bis 50 Gew.-% eines olefinisch ungesättigten Epoxids, Carbonsäureanhydrids, Carbonsäureimids, Oxazolins oder Oxazinons.

Dieses Copolymere ist beispielsweise aus folgenden Monomeren zusammengesetzt, wobei diese Aufzählung nicht erschöpfend ist:
a) α-Olefine wie beispielsweise Ethylen, Propen, 1-Buten, 1-Penten, 1-Hexen, 1-Octen, 1-Decen oder 1-Dodecen;
b) Acrylsäure, Methacrylsäure oder deren Salze, beispielsweise mit Na^{⊕} oder Zn^{2⊕} als Gegenion; Methylacrylat, Ethylacrylat, n-Propylacrylat, n-Butylacrylat, Isobutylacrylat, n-Hexylacrylat, n-Octylacrylat, 2-Ethylhexylacrylat, Isononylacrylat, Dodecylacrylat, Methylmethacrylat, Ethylmethacrylat, n-Propylmethacrylat, n-Butylmethacrylat, Isobutylmethacrylat, 2-Ethylhexylmethacrylat, Hydroxyethylacrylat, 4-Hydroxybutylmethacrylat, Glycidylacrylat, Glycidylmethacrylat, Acrylnitril, Methacrylnitril, Acrylamid, N-Methylacrylamid, N,N-Dimethylacrylamid, N-Ethylacrylamid, N-Hydroxyethylacrylamid, N-Propylacrylamid, N-Butylacrylamid, N-(2-Ethylhexyl)acrylamid, Methacrylamid, N-Methylmethacrylamid, N,N-Dimethylmethacrylamid, N-Ethylmethacrylamid, N-Hydroxyethylmethacrylamid, N-Propylmethacrylamid, N-Butylmethacrylamid, N,N-Dibutylmethacrylamid, N-(2-Ethylhexyl)methacrylamid;
c) Vinyloxiran, Allyloxiran, Glycidylacrylat, Glycidylmethacrylat, Maleinsäureanhydrid, Aconitsäureanhydrid, Itaconsäureanhydrid, ferner die aus diesen Anhydriden durch Reaktion mit Wasser entstehenden Dicarbonsäuren; Maleinimid, N-Methylmaleinimid, N-Ethylmaleinimid, N-Butylmaleinimid, N-Phenylmaleinimid, Aconitsäureimid, N-Methylaconitsäureimid, N-Phenylaconitsäureimid, Itaconsäureimid, N-Methylitaconsäureimid, N-Phenylitaconsäureimid, N-Acryloylcaprolactam, N-Methacryloylcaprolactam, N-Acryloyllaurinlactam, N-Methacryloyllaurinlactam, Vinyloxazolin, Isopropenyloxazolin, Allyloxazolin, Vinyloxazinon oder Isopropenyloxazinon.

Bei einer Verwendung von Glycidylacrylat oder Glycidylmethacrylat fungieren diese gleichzeitig auch als acrylische Verbindung b), so dass bei ausreichender Menge des Glycidyl(meth)acrylats keine weitere acrylische Verbindung enthalten zu sein braucht. In dieser speziellen Ausführungsform enthält das Copolymere Einheiten der folgenden Monomere:
a) 20 bis 94,5 Gew.-% eines oder mehrerer α-Olefine mit 2 bis 12 C-Atomen,
b) 0 bis 79,5 Gew.-% einer oder mehrerer acrylischer Verbindungen, ausgewählt aus
   - Acrylsäure bzw. Methacrylsäure bzw. deren Salzen,
   - Estern von Acrylsäure bzw. Methacrylsäure mit einem C₁- bis C₁₂-Alkohol,
   - Acrylnitril bzw. Methacrylnitril,
   - Acrylamiden bzw. Methacrylamiden
c) 0,5 bis 80 Gew.-% eines Esters von Acrylsäure oder Methacrylsäure, der eine Epoxidgruppe enthält,
wobei die Summe von b) und c) mindestens 5,5 Gew.-% ergibt.

Das Copolymere kann in kleiner Menge weitere einpolymerisierte Monomere enthalten, sofern diese die Eigenschaften nicht nennenswert beeinträchtigen, wie beispielsweise Maleinsäuredimethylester, Fumarsäuredibutylester, Itaconsäurediethylester oder Styrol.

Die Herstellung derartiger Copolymerer ist Stand der Technik. Eine Vielzahl verschiedener Typen hiervon ist als Handelsprodukt erhältlich, beispielsweise unter der Bezeichnung LOTADER® (Arkema; Ethylen/Acrylat/Terkomponente bzw. Ethylen/Glycidylmethacrylat).

In einer bevorzugten Ausführungsform enthält die Polyamidformmasse hierbei folgende Komponenten:
1. 60 bis 96,5 Gew.-Teile Polyamid,
2. 3 bis 39,5 Gew.-Teile einer Schlagzähkomponente, die Säureanhydridgruppen enthält, wobei die Schlagzähkomponente ausgewählt ist aus Ethylen/α-Olefin-Copolymeren und Styrol-Ethylen/Butylen-Blockcopolymeren,
3. 0,5 bis 20 Gew.-Teile eines Copolymeren, das Einheiten der folgenden Monomere enthält:
   a) 20 bis 94,5 Gew.-% eines oder mehrerer α-Olefine mit 2 bis 12 C-Atomen,
   b) 5 bis 79,5 Gew.-% einer oder mehrerer acrylischer Verbindungen, ausgewählt aus
      - Acrylsäure bzw. Methacrylsäure bzw. deren Salzen,
      - Estern von Acrylsäure bzw. Methacrylsäure mit einem C₁- bis C₁₂-Alkohol, die gegebenenfalls eine freie Hydroxyl- oder Epoxidfunktion tragen können,
      - Acrylnitril bzw. Methacrylnitril,
      - Acrylamiden bzw. Methacrylamiden,
   c) 0,5 bis 50 Gew.-% eines olefinisch ungesättigten Epoxids, Carbonsäureanhydrids, Carbonsäureimids, Oxazolins oder Oxazinons,
   wobei die Summe der Gewichtsteile der Komponenten gemäß 1., 2. und 3. 100 beträgt.

In einer weiteren bevorzugten Ausführungsform enthält die Formmasse hierbei:
1. 65 bis 90 Gew.-Teile und besonders bevorzugt 70 bis 85 Gew.-Teile Polyamid,
2. 5 bis 30 Gew.-Teile, besonders bevorzugt 6 bis 25 Gew.-Teile und insbesondere bevorzugt 7 bis 20 Gew.-Teile der Schlagzähkomponente,
3. 0,6 bis 15 Gew.-Teile und besonders bevorzugt 0,7 bis 10 Gew.-Teile des Copolymeren, welches bevorzugt Einheiten der folgenden Monomere enthält:
   a) 30 bis 80 Gew.-% α-Olefin(e),
   b) 7 bis 70 Gew.-% und besonders bevorzugt 10 bis 60 Gew.-% der acrylischen Verbindung(en),
   c) 1 bis 40 Gew.-% und besonders bevorzugt 5 bis 30 Gew.-% des olefinisch ungesättigten Epoxids, Carbonsäureanhydrids, Carbonsäureimids, Oxazolins oder Oxazinons.

Als Schlagzähkomponente kann darüber hinaus auch Nitrilkautschuk (NBR) oder hydrierter Nitrilkautschuk (H-NBR), die gegebenenfalls funktionelle Gruppen enthalten, verwendet werden. Entsprechende Formmassen sind in der US2003/0220449A1 beschrieben.

Andere Thermoplaste, die in der Polyamidformmasse enthalten sein können, sind in erster Linie Polyolefine. Sie können in einer Ausführungsform, wie weiter oben bei den Schlagzähmodifikatoren beschrieben, Säureanhydridgruppen enthalten und dann gegebenenfalls zusammen mit einem unfunktionalisierten Schlagzähmodifikator vorliegen. In einer weiteren Ausführungsform sind sie nicht funktionalisiert und liegen in der Formmasse in Kombination mit einem funktionalisierten Schlagzähmodifikator oder einem funktionalisierten Polyolefin vor. Der Begriff "funktionalisiert" bedeutet, dass die Polymere gemäß dem Stand der Technik mit Gruppen versehen sind, die mit den Polyamid-Endgruppen reagieren können, z. B.

Säureanhydridgruppen, Carboxylgruppen, Epoxidgruppen oder Oxazolingruppen. Hierbei sind folgende Zusammensetzungen bevorzugt:
1. 50 bis 95 Gew.-Teile Polyamid,
2. 1 bis 49 Gew.-Teile funktionalisiertes oder unfunktionalisiertes Polyolefin sowie
3. 1 bis 49 Gew.-Teile funktionalisierter oder unfunktionalisierter Schlagzähmodifikator,
wobei die Summe der Gewichtsteile der Komponenten gemäß 1., 2. und 3. 100 beträgt.

Beim Polyolefin handelt es sich beispielsweise um Polyethylen oder um Polypropylen. Grundsätzlich kann jeder handelsübliche Typ eingesetzt werden. So kommen beispielsweise in Frage: Lineares Polyethylen hoher, mittlerer oder niedriger Dichte, LDPE, Ethylen-Acrylester-Copolymere, Ethylen-Vinylacetat-Copolymere, isotaktisches oder ataktisches Homopolypropylen, Randomcopolymere von Propen mit Ethen und/oder Buten-1, Ethylen-Propylen-Blockcopolymere und dergleichen mehr. Das Polyolefin kann nach jedem bekannten Verfahren hergestellt werden, beispielsweise nach Ziegler-Natta, nach dem Phillips-Verfahren, mittels Metallocenen oder radikalisch. Das Polyamid kann in diesem Fall auch beispielsweise PA6 und/oder PA66 sein.

In einer möglichen Ausführungsform enthält die Formmasse 1 bis 25 Gew.-% Weichmacher, besonders bevorzugt 2 bis 20 Gew.-% und insbesondere bevorzugt 3 bis 15 Gew.-%.

Weichmacher und ihr Einsatz bei Polyamiden sind bekannt. Eine allgemeine Übersicht über Weichmacher, die für Polyamide geeignet sind, kann Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure. Als Weichmacher kommen u. a. p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid infrage.

Darüber hinaus kann die Formmasse noch übliche Mengen von Zusatzstoffen enthalten, die zum Einstellen bestimmter Eigenschaften benötigt werden. Beispiele hierfür sind Pigmente bzw. Füllstoffe wie Ruß, Titandioxid, Zinksulfid, Silikate oder Carbonate, Verstärkungsfasern wie z.B. Glasfasern, Verarbeitungshilfsmittel wie Wachse, Zinkstearat oder Calciumstearat, Flammschutzmittel wie Magnesiumhydroxid, Aluminiumhydroxid oder Melamincyanurat, Antioxidantien, UV-Stabilisatoren sowie Zusätze, die dem Produkt antielektrostatische Eigenschaften oder eine elektrische Leitfähigkeit verleihen wie z. B. Kohlenstofffasern, Graphitfibrillen, Fasern aus rostfreiem Stahl bzw. Leitfähigkeitsruß.

Eine gute mechanische Widerstandsfähigkeit der Polyamidumhüllung wird insbesondere dann erhalten, wenn die Viskosität der aufgebrachten Polyamidformmasse bei 240 °C und einer Schergeschwindigkeit von 0,1 1/s mindestens 2000 Pa·s, bevorzugt mindestens 2300 Pa·s, besonders bevorzugt mindestens 3000 Pa·s, insbesondere bevorzugt mindestens 5000 Pa·s und ganz besonders bevorzugt mindestens 8000 Pa·s beträgt. Die Viskosität wird in einem Kegel-Platte-Viskosimeter gemäß ASTM D 4440-3 bestimmt.

Eine hohe Viskosität der Polyamidformmasse geht in der Regel mit einem hohen Molekulargewicht des Polyamids einher. Ein Maß für das Molekulargewicht des Polyamids ist die Lösungsviskosität. Im Rahmen der Erfindung ist bevorzugt, dass die relative Lösungsviskosität ηᵣₑₗ des Polyamids in der aufgebrachten Formmasse, gemessen in einer 0,5 Gew.-%igen Lösung in m-Kresol bei 23 °C gemäß ISO 307, mindestens 1,8, besonders bevorzugt mindestens 2,0, insbesondere bevorzugt mindestens 2,1 und ganz besonders bevorzugt mindestens 2,2 beträgt.

Ein bekanntes Verfahren zur Herstellung solcher Polyamide ist die Festphasennachkondensation von granulierten niederviskosen Polyamiden zu hochviskosem Polyamid bei einer Temperatur, die niedriger ist als die Schmelztemperatur. Das Verfahren wird beispielsweise in der CH 359 286 sowie der US 3 821 171 beschrieben. Normalerweise wird die Festphasennachkondensation von Polyamiden in einem diskontinuierlich oder kontinuierlich arbeitenden Trockner unter Inertgas oder Vakuum durchgeführt. Diese Methode erlaubt die Herstellung von Polyamiden mit sehr hohem Molekulargewicht.

Eine andere Möglichkeit zur Herstellung von hochviskosen Polyamiden ist die kontinuierliche Nachkondensation in der Schmelze unter Einsatz verschiedenartiger Schneckenapparaturen.

Die WO 2006/079890 gibt an, dass hochviskose Polyamidformmassen durch Mischen eines hochmolekularen Polyamids und eines niedermolekularen Polyamids erhalten werden können.

Darüber hinaus ist der Zugang zu hochviskosen Polyamiden bzw. Polyamidformmassen durch Einsatz aufbauender Additive möglich; geeignete Additive bzw. Verfahren sind beispielsweise in folgenden Schriften beschrieben: WO 98/47940, WO 96/34909, WO 01/66633, WO 03/066704, JP-A-01/197526, JP-A-01/236238, DE-B-24 58 733, EP-A-1 329 481, EP-A-1 518 901, EP-A-1 512 710, EP-A-1 690 889, EP-A-1 690 890 und WO 00/66650.

Die gemäß diesem Stand der Technik hergestellten Formmassen benötigen allerdings in der Regel bei der Extrusion eine sehr hohe Stromaufnahme bzw. ein sehr hohes Drehmoment und der Druck an der Düse ist sehr hoch. Darüber hinaus tritt bei den hohen Scherkräften eine wahrnehmbare Kettenspaltung auf, was zu einer Verringerung des Molekulargewichts bei der Verarbeitung führt.

Aus diesen Gründen ist es im Rahmen der Erfindung bevorzugt, dass die Polyamidformmasse erst während des Verarbeitungsvorgangs mit Hilfe eines das Molekulargewicht aufbauenden Additivs aufkondensiert wird. Gegenstand der Erfindung ist daher auch die anspruchsgemäße Verwendung eines Rohrs, wobei die extrudierte Schicht aus einer Polyamidformmasse mittels folgender Verfahrensschritte aufgebracht wurde:
a) Eine Polyamidformmasse wurde bereitgestellt;
b) eine Vormischung der Polyamidformmasse und des aufbauenden Additivs, beispielsweise einer Verbindung mit mindestens zwei Carbonateinheiten, wurde hergestellt,
c) die Mischung wurde gegebenenfalls gelagert und/oder transportiert und
d) die Mischung wurde anschließend zur Extrusion eingesetzt, wobei erst in diesem Schritt die Aufkondensation erfolgte.

Es wurde festgestellt, dass bei dieser Zugabeweise während der Verarbeitung eine signifikante Erhöhung der Schmelzesteifigkeit eintritt, bei gleichzeitig geringer Motorlast. Somit können trotz hoher Schmelzeviskosität hohe Durchsätze bei der Verarbeitung erzielt werden, woraus eine Verbesserung der Wirtschaftlichkeit des Herstellverfahrens resultiert. Das Verfahren wird nachfolgend beispielhaft für den Fall beschrieben, bei dem das aufbauende Additiv eine Verbindung mit mindestens zwei Carbonateinheiten ist.

Bevorzugt hat das Ausgangspolyamid ein Molekulargewicht Mₙ von größer als 5000, insbesondere von größer als 8000. Hierbei werden Polyamide eingesetzt, deren Endgruppen zumindest teilweise als Aminogruppen vorliegen. Beispielsweise liegen mindestens 30 %, mindestens 40 %, mindestens 50 %, mindestens 60 %, mindestens 70 %, mindestens 80 % oder mindestens 90 % der Endgruppen als Aminoendgruppen vor. Die Herstellung von Polyamiden mit höherem Aminoendgruppengehalt unter Verwendung von Diaminen oder Polyaminen als Regler ist Stand der Technik. Im vorliegenden Fall wird bei der Herstellung des Polyamids bevorzugt ein aliphatisches, cycloaliphatisches oder araliphatisches Diamin mit 4 bis 44 C-Atomen als Regler eingesetzt. Geeignete Diamine sind beispielsweise Hexamethylendiamin, Decamethylendiamin, 2.2.4- bzw. 2.4.4-Trimethylhexamethylendiamin, Dodecamethylendiamin, 1.4-Diaminocyclohexan, 1.4- oder 1.3-Dimethylaminocyclohexan, 4.4'-Diaminodicyclohexylmethan, 4.4'-Diamino-3.3'-dimethyldicyclohexylmethan, 4.4'-Diaminodicyclohexylpropen, Isophorondiamin, Metaxylylendiamin oder Paraxylylendiamin.

In einer weiteren bevorzugten Ausführungsform wird bei der Herstellung des Polyamids ein Polyamin als Regler und gleichzeitig Verzweiger eingesetzt. Beispiele hierfür sind Diethylentriamin, 1.5-Diamino-3-(β-aminoethyl)pentan, Tris(2-aminoethyl)amin, N,N-Bis(2-aminoethyl)-N',N'bis[2-[bis(2-aminoethyl)amino]-ethyl]-1,2-ethandiamin, Dendrimere sowie Polyethylenimine, insbesondere verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
25 bis 46 % primäre Aminogruppen,
30 bis 45 % sekundäre Aminogruppen und
16 bis 40 % tertiäre Aminogruppen.

Die Verbindung mit mindestens zwei Carbonateinheiten wird in einem Mengenverhältnis von 0,005 bis 10 Gew.-% eingesetzt, berechnet im Verhältnis zum eingesetzten Polyamid. Vorzugsweise liegt dieses Verhältnis im Bereich von 0,01 bis 5,0 Gew.-%, besonders bevorzugt im Bereich von 0,05 bis 3 Gew.-%. Der Begriff "Carbonat" bedeutet hier Ester der Kohlensäure insbesondere mit Phenolen oder Alkoholen.

Die Verbindung mit mindestens zwei Carbonateinheiten kann niedermolekular, oligomer oder polymer sein. Sie kann vollständig aus Carbonateinheiten bestehen oder sie kann noch weitere Einheiten aufweisen. Diese sind vorzugsweise Oligo- oder Polyamid-, -ester-, -ether-, -etheresteramid- oder -etheramideinheiten. Solche Verbindungen können durch bekannte Oligo- oder Polymerisationsverfahren bzw. durch polymeranaloge Umsetzungen hergestellt werden.

In einer bevorzugten Ausführungsform handelt es sich bei der Verbindung mit mindestens zwei Carbonateinheiten um ein Polycarbonat, beispielsweise auf Basis von Bisphenol A, bzw. um ein Blockcopolymeres, das einen derartigen Polycarbonatblock enthält.

Die Eindosierung der als Additiv verwendeten Verbindung mit mindestens zwei Carbonateinheiten in Form eines Masterbatches ermöglicht eine genauere Dosierung des Additivs, da größere Mengen verwendet werden. Es stellte sich zudem heraus, dass durch die Verwendung eines Masterbatches eine verbesserte Extrudatqualität erzielt wird. Das Masterbatch umfasst als Matrixmaterial bevorzugt das Polyamid, das auch im erfindungsgemäßen Verfahren aufkondensiert wird, oder ein damit verträgliches Polyamid, jedoch können auch unverträgliche Polyamide unter den Reaktionsbedingungen eine partielle Anbindung an das aufzukondensierende Polyamid erfahren, was eine Kompatibilisierung bewirkt. Das als Matrixmaterial im Masterbatch verwendete Polyamid hat bevorzugt ein Molekulargewicht Mₙ von größer als 5000 und insbesondere von größer als 8000. Hierbei sind diejenigen Polyamide bevorzugt, deren Endgruppen überwiegend als Carbonsäuregruppen vorliegen. Beispielsweise liegen mindestens 80 %, mindestens 90 % oder mindestens 95 % der Endgruppen als Säuregruppen vor. Alternativ hierzu können Polyetheramide verwendet werden, deren Endgruppen überwiegend als Aminogruppen vorliegen; auf diese Weise wird eine verbesserte Hydrolysebeständigkeit erzielt.

Die Konzentration der Verbindung mit mindestens zwei Carbonateinheiten im Masterbatch beträgt vorzugsweise 0,15 bis 50 Gew.-%, besonders bevorzugt 0,2 bis 25 Gew.-% und insbesondere bevorzugt 0,3 bis 15 Gew.-%. Die Herstellung eines solchen Masterbatches erfolgt in der üblichen, dem Fachmann bekannten Weise.

Geeignete Verbindungen mit mindestens zwei Carbonateinheiten sowie geeignete Masterbatches sind in der WO 00/66650, auf die hier ausdrücklich Bezug genommen wird, ausführlich beschrieben.

Die Erfindung ist anwendbar bei Polyamiden, die herstellungsbedingt mindestens 5 ppm Phosphor in Form einer sauren Verbindung enthalten. In diesem Fall wird der Polyamidformmasse vor der Compoundierung oder bei der Compoundierung 0,001 bis 10 Gew.-%, bezogen auf das Polyamid, eines Salzes einer schwachen Säure zugegeben. Geeignete Salze sind in der DE-A 103 37 707 offenbart, auf die hiermit ausdrücklich Bezug genommen wird.

Die Erfindung ist jedoch genauso gut anwendbar bei Polyamiden, die herstellungsbedingt weniger als 5 ppm Phosphor oder gar keinen Phosphor in Form einer sauren Verbindung enthalten. In diesem Fall kann zwar, muss aber nicht ein entsprechendes Salz einer schwachen Säure zugegeben werden.

Die Verbindung mit mindestens zwei Carbonateinheiten wird als solche oder als Masterbatch erst nach der Compoundierung, das heißt erst nach der Herstellung der Polyamidformmasse, aber spätestens während der Verarbeitung zugegeben. Bevorzugt mischt man bei der Verarbeitung das aufzukondensierende Polyamid bzw. die aufzukondensierende Polyamidformmasse als Granulat mit dem Granulat oder Pulver der Verbindung mit mindestens zwei Carbonateinheiten oder dem entsprechenden Masterbatch. Es kann aber auch eine Granulatmischung der fertig compoundierten Polyamidformmasse mit der Verbindung mit mindestens zwei Carbonateinheiten bzw. dem Masterbatch hergestellt, anschließend transportiert oder gelagert und danach verarbeitet werden. Entsprechend kann natürlich auch mit Pulvermischungen verfahren werden. Entscheidend ist, dass die Mischung erst bei der Verarbeitung aufgeschmolzen wird. Eine gründliche Vermischung der Schmelze bei der Verarbeitung ist empfehlenswert. Das Masterbatch kann genauso gut jedoch auch als Schmelzestrom mit Hilfe eines beigestellten Extruders in die Schmelze der zu verarbeitenden Polyamidformmasse zudosiert und dann gründlich eingemischt werden; die Verfahrensschritte b) und d) fallen dann zusammen.

Anstelle der Verbindung mit mindestens zwei Carbonateinheiten kann auch jedes andere geeignete aufbauende Additiv eingesetzt werden, beispielsweise eines, das in der obengenannten Literatur offenbart ist. Geeignete Mengenverhältnisse sind auch hier 0,005 bis 10 Gew.-%, berechnet im Verhältnis zum eingesetzten Polyamid, vorzugsweise 0,01 bis 5,0 Gew.-%, besonders bevorzugt 0,05 bis 3 Gew.-%.

Die aufgebrachte Polyamidschicht muss mindestens so dick sein, dass sie unter den Bedingungen der Aufbringung als geschlossene Schicht erzeugt werden kann. Die Schichtdicke beträgt mindestens 1,0 mm, bevorzugt mindestens 1,2 mm und besonders bevorzugt mindestens 1,4 mm.

Üblicherweise haben sich Schichtdicken bis etwa 6 mm, vorzugsweise bis etwa 5 mm, besonders bevorzugt bis etwa 4 mm und insbesondere bevorzugt bis etwa 3 mm bewährt. Bei Bedarf kann die Schicht jedoch auch dicker gewählt werden.

Die Polyamidschicht kann direkt auf der Metalloberfläche aufgebracht sein. Im Allgemeinen befindet sich aber zwischen der Metalloberfläche und der Polyamidschicht mindestens eine weitere Schicht. Beispielsweise kann es sich um folgende Schichten handeln:
- Eine Keramikschicht, beispielsweise gemäß WO 03/093374;
- eine Grundierungsschicht, beispielsweise aus Epoxidharz (US 5 580 659) oder einer wasserbasierenden Mischung aus Epoxidharz und Polyacrylatlatex (WO 00/04106);
- eine Schicht aus einem Polyolefin, das funktionelle Gruppen trägt. Als funktionelle Gruppen kommen beispielsweise Carboxylgruppen oder Säureanhydridgruppen (WO 02/094922), Epoxygruppen oder Alkoxysilangruppen (EP-A-0 346 101) in Frage. Die Polyolefinschicht kann auch geschäumt sein. Das Polyolefin ist bevorzugt Polyethylen oder Polypropylen;
- ein anders zusammengesetzter Haftvermittler, der gewährleisten soll, dass bei mechanischer Beanspruchung der Verbund von Polyamidschicht und Grundmaterial nicht beeinträchtigt wird;
- eine textile Verstärkung in Form von Gewebe oder Matten, beispielsweise aus Glasfasern oder Aramidfasern (Kevlar).

Bevorzugte Schichtenanordnungen sind folgende:
Metall / Keramikschicht / Polyamidschicht;
Metall / Keramikschicht / Grundierungsschicht / Polyamidschicht;
Metall / Keramikschicht / Grundierungsschicht / Haftvermittler /Polyamidschicht;
Metall / Grundierungsschicht / Polyamidschicht;
Metall / Grundierungsschicht / Haftvermittler / Polyamidschicht;
Metall / Grundierungsschicht / Polyolefinschicht / Polyamidschicht.

In jedem dieser Fälle kann sich nach außen hin an die Polyamidschicht mindestens eine weitere Schicht anschließen, beispielsweise eine Ummantelung zur thermischen Isolierung.

Eine eventuelle Keramikschicht, Grundierungsschicht und/oder Polyolefinschicht wird auf das Rohr nach jedem beliebigen Verfahren aufgebracht. Geeignete Verfahren sind Stand der Technik.

Die Polyamidschicht wird so aufgebracht, wie es auch für die Polyolefinschicht Stand der Technik ist, beispielsweise mittels Schlauch- oder Wickelextrusion. In einer möglichen Variante kann die Polyamidschicht zusammen mit einer ebenfalls aufzubringenden Polyolefinschicht bzw. Haftvermittlerschicht durch Coextrusion eines Mehrschichtverbundes erzeugt und aufgebracht werden.

Die Schlauch- und die Wickelextrusion sind seit langem bewährte Umhüllungsverfahren für Rohre. Näher beschrieben werden diese Verfahren im Stahlrohr-Handbuch, 12. Auflage, S. 392-409, Vulkan-Verlag Essen, 1995. In der DE 10 2005 007 034 A1 werden Extrusion entsprechender Polyamidformmassen sowie beschichtete Offshoreleitungen offenbart.

Der Außendurchmesser des Metallrohrs beträgt vorzugsweise mindestens 25 mm und maximal 1000 mm und besonders bevorzugt mindestens 32 mm und maximal 820 bzw. 650 mm.

Die Einzelstücke des Rohres werden bestimmungsgemäß zu einer Rohrleitung verbunden. Bei der Reeling-Methode findet dies auf dem Festland statt. Die verbundene Rohrleitung wird anschließend auf einen Wickel gewickelt und mit einem Schiff an die Baustelle transportiert und ggf. direkt installiert. Die Rohrleitung kann jedoch auch nach der J-Lay-Methode oder der S-Lay-Methode hergestellt und verlegt werden.

Die fragliche Rohrleitung kann eine Produktionsleitung, eine Steigleitung, eine Produktleitung, eine Verteilerleitung, eine Förderleitung oder eine Transportleitung sein. Sie dient beispielsweise dem Transport von Gas, Luft, Ölen wie beispielsweise Rohöl, Leichtöl oder Schweröl, Kraftstoffen wie beispielsweise Kerosin oder Diesel, Petrochemikalien, Sole, Laugen oder abrasiven Medien.

Aufgrund der hohen mechanischen Festigkeit, der guten Abriebeigenschaften, der sehr hohen Kratzfestigkeit sowie der optimalen Dicke der aufgebrachten Polyamidschicht kann gemäß der Erfindung gleichzeitig ein guter Korrosionsschutz als auch die für die gewählte Verlegemethode benötigte Widerstandsfestigkeit der Außenhülle gewährleistet werden.

Die erfindungsgemäße Rohrleitung zeichnet sich gegenüber den gemäß dem Stand der Technik hergestellten Rohrleitungen durch eine deutlich verlängerte Lebensdauer aus.

## Patentansprüche

1. Verwendung eines beschichteten metallischen Leitungsrohrs zur Herstellung einer im Wasser verlegten Rohrleitung, wobei bedingt durch das gewählte Verlegeverfahren die Beschichtung im Zuge der Verlegung einer scherenden Druckbelastung und/oder einer Biegebelastung ausgesetzt ist mit der Maßgabe, dass das Leitungsrohr mit einer extrudierten mindestens 1,0 mm dicken Schicht aus einer Polyamidformmasse umhüllt ist, **dadurch gekennzeichnet, dass** die Rohrleitung zum Transport aufgewickelt ist und vor oder während der Verlegung abgewickelt wird oder die Rohrleitung nach der J-Lay- oder der S-Lay-Methode verlegt wird, und wobei weiterhin die Viskosität der extrudierten Polyamidformmasse bei 240 °C und einer Schergeschwindigkeit von 0,1 1/s gemäß ASTM D 4440-3 mindestens 2000 Pa·s beträgt.

2. Verwendung gemäß Anspruch 1,
**dadurch gekennzeichnet,**
**dass** sich zwischen dem metallischen Leitungsrohr und der Schicht aus der Polyamidformmasse eine oder mehrere weitere Schichten befinden, die ausgewählt sind aus der Gruppe
- Keramikschicht
- Grundierungsschicht
- Schicht aus einem Polyolefin, das funktionelle Gruppen trägt
- anders zusammengesetzte Haftvermittlerschicht und
- textile Verstärkung in Form von Gewebe oder Matten.

3. Verwendung gemäß einem der vorhergehenden Ansprüche,
**dadurch gekennzeichnet,**
**dass** der Außendurchmesser des Metallrohrs 25 bis 1000 mm beträgt.

4. Verwendung gemäß einem der vorhergehenden Ansprüche,
**dadurch gekennzeichnet,**
**dass** die relative Lösungsviskosität ηᵣₑₗ des Polyamids in der extrudierten Formmasse gemäß ISO 307 mindestens 1,8 beträgt.

5. Verwendung gemäß einem der vorhergehenden Ansprüche,
**dadurch gekennzeichnet,**
**dass** die extrudierte Schicht aus der Polyamidformmasse mittels folgender Verfahrensschritte aufgebracht wurde:
a) Eine Polyamidformmasse wurde bereitgestellt,
b) eine Vormischung der Polyamidformmasse und des aufbauenden Additivs wurde hergestellt,
c) die Mischung wurde gegebenenfalls gelagert und/oder transportiert und
d) die Mischung wurde anschließend zur Extrusion eingesetzt, wobei erst in diesem Schritt die Aufkondensation erfolgte.

6. Verwendung gemäß einem der vorhergehenden Ansprüche,
**dadurch gekennzeichnet,**
**dass** das aufbauende Additiv eine Verbindung mit mindestens zwei Carbonateinheiten ist.

## Claims

1. Use of a coated metallic pipe for producing a pipeline laid in water, where, during the course of the laying process, and by virtue of the selected laying process, the coating is subject to a shearing pressure load and/or to a flexural load, with the proviso that the pipe has an extruded coating layer of thickness at least 1.0 mm made of a polyamide moulding composition,
**characterized in that**,
the pipeline has been wound up for transport and is unwound prior to or during the laying process or the pipeline is laid by the J-lay method or by the S-lay method, and where moreover the viscosity of the extruded polyamide moulding composition to ASTM D 4440-3 is at least 2000 Pa·s at 240°C using a shear rate of 0.1 sec⁻¹.

2. Use according to Claim 1,
**characterized in that**,
between the metallic pipe and the layer made of the polyamide moulding composition there is/are one or more further layers, selected from the group of
- ceramic layer
- primer layer
- layer made of a polyolefin which bears functional groups
- adhesion-promoter layer having a different constitution, and
- textile reinforcement in the form of woven or mats.

3. Use according to any one of the preceding claims,
**characterized in that**,
the external diameter of the metal pipe is from 25 to 1000 mm.

4. Use according to any one of the preceding claims,
**characterized in that**,
the relative solution viscosity ηᵣₑₗ of the polyamide in the extruded moulding composition is at least 1.8 to ISO 307.

5. Use according to any one of the preceding claims,
**characterized in that**,
the extruded layer made of the polyamide moulding composition has
been applied by means of the following process steps:
a) provision of a polyamide moulding composition,
b) production of a premix of the polyamide moulding composition and of the additive that increases molecular weight,
c) if appropriate, storage and/or transport of the mixture,
and
d) then use of the mixture for the extrusion process, where the condensation process to increase molecular weight is delayed until this step has begun.

6. Use according to any one of the preceding claims,
**characterized in that**,
the additive that increases molecular weight is a compound having at least two carbonate units.

## Revendications

1. Utilisation d'une conduite métallique revêtue pour la fabrication d'une canalisation posée sous l'eau, le revêtement étant exposé à une sollicitation de pression cisaillante et/ou à une sollicitation de flexion au cours de la pose en conséquence du procédé de pose choisi, à condition que la conduite soit enveloppée avec une couche extrudée en un matériau de moulage polyamide d'une épaisseur d'au moins 1,0 mm, **caractérisée en ce que** la canalisation est enroulée pour le transport et déroulée avant ou pendant la pose ou la canalisation est posée selon le procédé J-Lay ou S-Lay, et la viscosité du matériau de moulage polyamide extrudé à 240 °C et à une vitesse de cisaillement de 0,1 1/s selon ASTM D 4440-3 est d'au moins 2 000 Pa·s.

2. Utilisation selon la revendication 1, **caractérisée en ce qu'**une ou plusieurs couches supplémentaires se trouvent entre la conduite métallique et la couche en matériau de moulage polyamide, choisies dans le groupe constitué par :
- une couche céramique,
- une couche primaire,
- une couche en une polyoléfine qui porte des groupes fonctionnels,
- une couche de promoteur d'adhésion de composition différente et
- un renfort textile sous la forme de tissus ou de mats.

3. Utilisation selon l'une quelconque des revendications précédentes, **caractérisée en ce que** le diamètre extérieur du tube métallique est de 25 à 1 000 mm.

4. Utilisation selon l'une quelconque des revendications précédentes, **caractérisée en ce que** la viscosité relative en solution ηᵣₑₗ du polyamide dans le matériau de moulage extrudé selon ISO 307 est d'au moins 1,8.

5. Utilisation selon l'une quelconque des revendications précédentes, **caractérisée en ce que** la couche extrudée en matériau de moulage polyamide est appliquée par les étapes de procédé suivantes :
a) un matériau de moulage polyamide est préparé,
b) un prémélange du matériau de moulage polyamide et de l'additif de développement est préparé,
c) le mélange est éventuellement stocké et/ou transporté, et
d) le mélange est ensuite utilisé pour l'extrusion, la condensation n'ayant lieu qu'à cette étape.

6. Utilisation selon l'une quelconque des revendications précédentes, **caractérisée en ce que** l'additif de développement est un composé contenant au moins deux unités carbonate.
